# EUROPEAN PATENT SPECIFICATION

(11) **EP 3 421 272 B1**
(45) Date of publication and mention of the grant of the patent: **18.11.2020**
(21) Application number: 17178924.1
(22) Date of filing: 30.06.2017
(51) Int. Cl.: B60D 1/02, B60D 1/62, B60D 1/28

(54) **TRAILER COUPLING WITH SENSOR FOR WEAR DETECTION**
ANHÄNGERKUPPLUNG MIT SENSOR ZUR VERSCHLEISSDETEKTION
DISPOSITIF D'ATTELAGE DE REMORQUE AVEC CAPTEUR DE MESURE D'USURE

(43) Date of publication of application: 02.01.2019
(73) Proprietor: VBG Group AB (Publ), 462 28 Vänersborg (SE)
(72) Inventor: THORÉN, Anders, 460 64 FRÄNDEFORS (SE); KARLSSON, Erik, 467 91 GRÄSTORP (SE)
(74) Representative: AWA Sweden AB

(56) References cited:
- EP-A1- 0 823 343
- EP-A1- 3 047 986
- DE-U1- 9 401 718

## Description

### TECHNICAL FIELD OF THE INVENTION

The present invention relates to a trailer coupling for connecting a trailer to a towing vehicle on which the trailer coupling is mounted.

### BACKGROUND OF THE INVENTION

Heavy vehicles, such as trucks, are often equipped with a coupling allowing a trailer to be connected to the vehicle. An example of such a coupling is the "VBG 795V-2" sold by VBG AB, which has a guiding funnel for receiving an eye of a drawbar fixed to a trailer and a vertically movable pin for securing the eye inside the guiding funnel. In order to connect a trailer to the truck, the pin is first manually raised by means of a handle to a locked upper position in which a lower portion of the pin still extends into the guiding funnel. The truck driver then manoeuvres the truck to position the eye inside the guiding funnel. Upon entering the guiding funnel, the eye comes into contact with the lower portion of the pin and thereby pushes the pin slightly upwards. The upward movement releases the locked pin, which then drops down automatically through the eye, the pin thereby locking the eye in a towing position inside the guiding funnel.

The above-described coupling has a support arranged to abut from below against the eye in order to reduce contact wear between the guiding funnel and the eye. Over time the support wears out and need to be replaced. It happens that the support is not replaced in time, something which can lead to excessive wear on the coupling and the eye, possibly causing damage thereon. Moreover, if the support is not replaced in time, the driver may suddenly find that the trailer cannot be connected to the truck, because there is too much space between the worn-out support and the lower portion of the pin. The eye can then enter the compartment without unlocking the pin by pushing it upwards. In order to avoid such a scenario, some drivers replace the support too early, something which causes unnecessary costs.

Clearly, it would be desirable that the driver be notified at the appropriate time of the need to replace the support. The document DE 94 01 718 U1 discloses a trailer coupling according to the preamble of claim 1.

### SUMMARY OF THE INVENTION

In view of the foregoing, and according to a first aspect of the invention, there is provided a trailer coupling for connecting a trailer to a towing vehicle on which the trailer coupling is mounted, the trailer coupling being adapted to receive a connection portion of a drawbar mounted to the trailer to be towed, the trailer coupling comprising: a guiding funnel for guiding the connection portion into a towing position, the guiding funnel comprising a seat, a wearable support member removably arranged inside the seat so as to abut against the connection portion, when the connection portion is received by the trailer coupling and positioned in a towing position, the support member abutting from below and reducing contact wear between the guiding funnel and the connection portion; and a movable coupling member having a first position, in which the coupling member allows for the connection portion to be moved into and out of the towing position, and a second position, in which the coupling member secures the connection portion when the connection portion is in the towing position, the first position being such that the connection portion, when entering and leaving the towing position, pushes the coupling member to perform a movement. The trailer coupling further comprises a magnitude sensor configured to provide a measure indicative of a magnitude of the movement, the magnitude sensor thereby being capable of detecting that an amount of wear of the support member exceeds a predetermined threshold, the amount of wear being caused by friction against the connection portion when the connection portion is in the towing position.

The "towing vehicle" may be a motorized truck or an intermediate trailer, i.e. a trailer which is pulled by a truck and which in turn pulls a subsequent trailer. The "towing position" is such that, when the connection portion is secured in the towing position, the trailer can be towed by the towing vehicle. The coupling member may for example be a pin.

The invention is based on the realization that the magnitude of the coupling member's movement, when the coupling member is pushed by the connection portion entering or leaving the towing position, is an indirect indication of how much the support member has been worn down. The smaller the movement, the greater the amount of wear. This insight led the inventors to the above-described trailer coupling, which represent a reliable and inexpensive implementation of their insight. Measuring the wear of the support member indirectly, as done in the present invention, is also much simpler than measuring the wear directly.

By setting the predetermined threshold appropriately, on can ensure that the driver is alerted before there is any risk of damage to the trailer coupling and to the connection portion. This forewarning also enables the driver to check whether a new support member is in stock or needs to be ordered, whereby the time that the truck is not on the road may be reduced.

The magnitude sensor may be configured to provide a measure indicative of a magnitude of the coupling pin's movement resulting from the connection portion moving into the towing position and/or the connection portion moving out of the towing position.

The movement of the coupling member is typically an upward movement. The measure may be one of a distance, a position and an angle. Thus, the magnitude sensor may for example be configured to measure a distance traveled by the coupling pin in the upward direction and/or a position of the coupling pin when reaching an end of the movement in the upward direction.

The magnitude sensor may be configured to provide the measure by a contactless measurement technique. Stated differently, the magnitude sensor may be a contactless sensor. Examples of suitable contactless sensors include optical sensors, inductive sensors, magnetic sensors and Hall effect sensors. The magnitude sensor is exposed to grease, dirt, etc., and contactless sensors are particularly suitable for such an environment.

The coupling member may be arranged to be locked in the first position and to be unlocked by the movement.

The predetermined threshold may be set such that the connection portion is unable to enter and leave the towing position without pushing the coupling member to unlock when the amount of wear of the support member is less than or equal to the predetermined threshold. Choosing such a predetermined threshold ensures that the driver is forewarned and can take action to prevent a situation where the coupling member is not unlocked upon insertion of the connection portion.

The trailer coupling may comprise a locking member arranged to lock the coupling member in the second position and a lock sensor configured to detect a position of the locking member.

The lock sensor may be integrated with the magnitude sensor. The lock sensor and the magnitude sensor may be the same sensor, something which reduces the number of components of the trailer coupling and, thus, production costs.

The trailer coupling may be adapted to receive a connection portion in the form of an eye, and the coupling member may be arranged to secure the connection portion in the towing position by extending therethrough. This is a particularly robust way of securing the connection portion to the trailer coupling.

The support member is located inside a guiding funnel. Such a guiding funnel helps to guide the connection portion into the towing position.

### BRIEF DESCRIPTION OF THE DRAWINGS

The invention will now be described in more detail in the following with reference to the accompanying drawings, which by way of example illustrate a preferred embodiment of the invention.
Figure 1 is a perspective view of a trailer coupling and a drawbar.
Figure 2 is an exploded view in perspective of the trailer coupling in Figure 1.
Figure 3 is schematic a cross-sectional view of the trailer coupling in Figure 1 along line A-A.
Figure 4 is a schematic cross-sectional view of the trailer coupling in Figure 1 along the line B-B.
Figure 5 is similar to Figure 3, but the coupling member is shown in the upper position instead of the lower position as in Figure 3.
Figure 6 is similar to Figure 4, but the coupling member is shown in the upper position instead of the lower position as in Figure 4
Figure 7 shows a schematic cross-sectional side view of a connection portion and the support member in Figures 1 to 6.

### DETAILED DESCRIPTION OF PREFERRED EMBODIMENTS

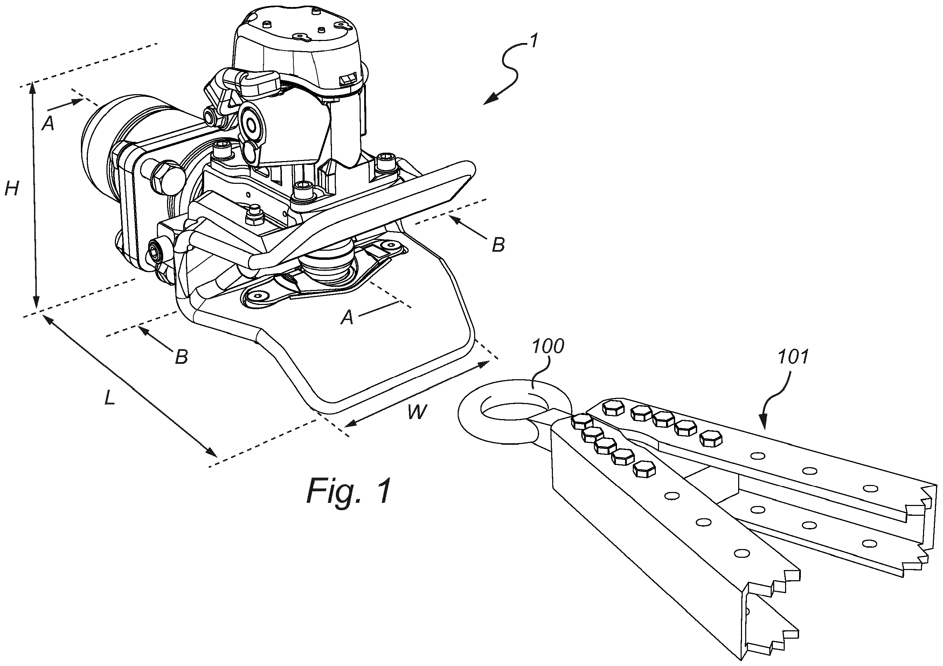

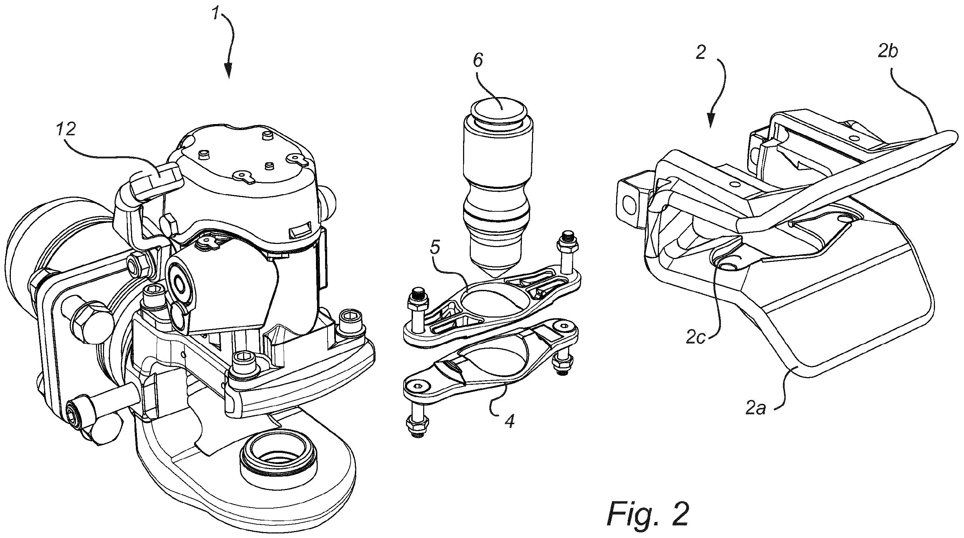

With respect to Figures 1 to 7 a trailer coupling 1 will be described. The trailer coupling 1 is adapted to be mounted at the rear end of a towing vehicle, such as a truck or a trailer, and to engage with a connection portion 100 of a drawbar 101 mounted to a trailer to be towed by the towing vehicle (the towing vehicle and the trailer to be towed are not shown in the Figures). In the illustrated example, the connection portion 100 is an eye, and the connection portion 100 will in the following therefore be referred to as the eye.

The trailer coupling 1 has a height H, a width W and a length L. When the trailer coupling 1 is mounted to a truck, the trailer coupling 1 is oriented such that the height H is vertical and the width W and length L are horizontal. The values of H, L and W depend on application-specific requirements, such as the size of the eye 100 with which the trailer coupling 1 is intended to be used.

The trailer coupling 1 comprises a guiding funnel 2 which may alternatively be referred to as a coupling mouth. The guiding funnel 2 is made of a hard and wear-resistant material, such as steel or some other metal. The guiding funnel 2 has two lips 2a, 2b. The two lips 2a, 2b are separated in the vertical direction, the lower lip 2a and the upper lip 2b extending obliquely downwards and obliquely upwards, respectively, in the rearward direction away from the truck. The lips 2a, 2b are arranged to guide the eye 100 into a compartment 3 defined by the guiding funnel 2.

The guiding funnel 2 comprises a seat 2c in which a support member 4 is arranged. The support member 4 is arranged so as to abut against the eye 100 when the eye 100 is positioned in a towing position inside the compartment 3. Thus, when in the towing position, the eye 100 lies on the support member 4. The support member 4 is removably arranged in the seat 2c, so the support member 4 can be replaced when worn out due to friction against the eye 100. In the illustrated example, the support member 4 is fixed to the seat 2c by means of two screws.

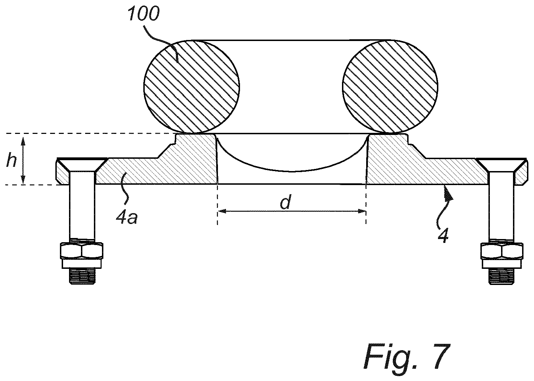

The size and the shape of the support member 4 depend on application-specific requirements, such as the size of the coupling member 6 (further discussed below) and the size of the eye 100 with which the trailer coupling 1 is intended to be used. The support member 4 may for example have an annular shape or a rectangular shape. In the illustrated example, the support member 4 has an elongated shape with a central through hole. In Figure 7, the diameter of the through hole is denoted by d. The length of the diameter d is such that the support member 4 can receive the coupling member 6 (further discussed below) inside the through hole. The diameter d is usually in the range from 30 mm to 70 mm. The maximum height of the support member 4 in the unworn state is denoted by h in Figure 7. That height is typically less 5 cm, for example approximately 2 cm. When the trailer coupling 1 is mounted to a truck, the support member 4 is positioned such that the height h is vertical and the diameter d is horizontal.

The support member 4 comprises a wearable material 4a. The choice of wearable material 4a depends on application-specific requirements, such as the material of which the eye 100 is made. Generally, it is desired that the eye 100 wear out the support member 4, and not the other way around. Accordingly, one usually chooses a wearable material 4a that is softer than the eye 100 and/or adapts the structure of the support member's 4 top surface, i.e. the surface that is in contact with the eye 100 during use. The wearable material 4a is typically chosen from the group consisting of plastic materials, composite materials and metals. Ductile cast iron is an example of a suitable metal.

The trailer coupling 1 includes a protection member 5. The protection member 5 is similar to the support member 4. The protection member 5 is arranged vertically opposite to the support member 4 so that, when the eye 100 is positioned in the towing position, the eye 100 is positioned between the support member 4 and the protection member 5. The protection member 5 helps to prevent the guiding funnel 2 and the eye 100 from wearing against each other. It should be noted that the protection member 5 is optional, so other examples of the trailer coupling 1 do not necessarily have a protection member 5.

The trailer coupling 1 further comprises a movable coupling member 6 for securing the eye 100 to the trailer coupling 1. In the illustrated example, the coupling member 6 is a pin, and the coupling member 6 will be referred to as the coupling pin in the following. The coupling pin 6 is arranged to secure the eye 100 to the trailer coupling 1 by extending through the eye 100. The coupling pin 6 is typically made of a metal, for example steel, but can be made of some other hard and wear-resistant material such that the coupling pin 6 is capable of withstanding the forces acting thereon from the eye 100 during normal operation. The coupling pin 6 is movable between a first position and a second position by a mechanism arranged to lift the coupling pin 6. In the illustrated example, the mechanism includes a pivotable arm 7 and a lifting sleeve 8. The lifting sleeve 8 engages with a groove in the coupling pin 6.

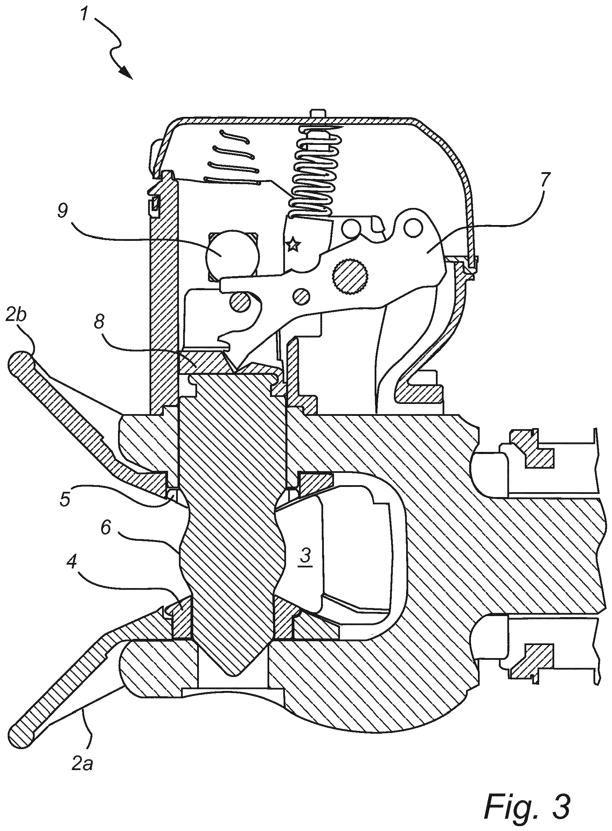

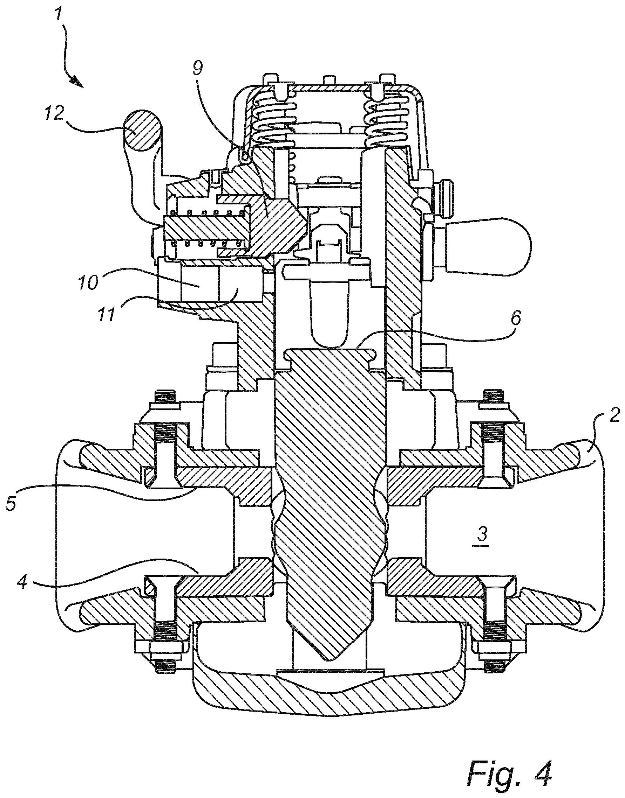

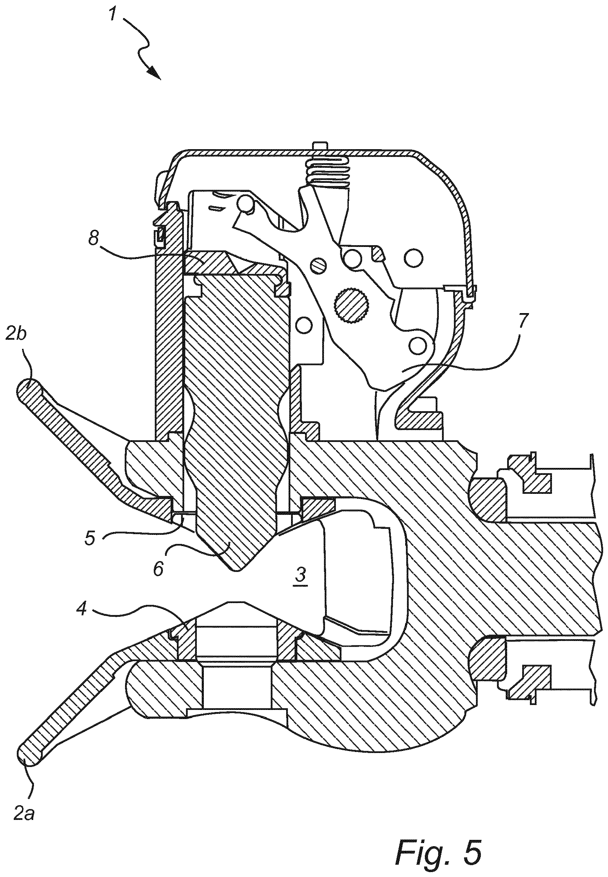

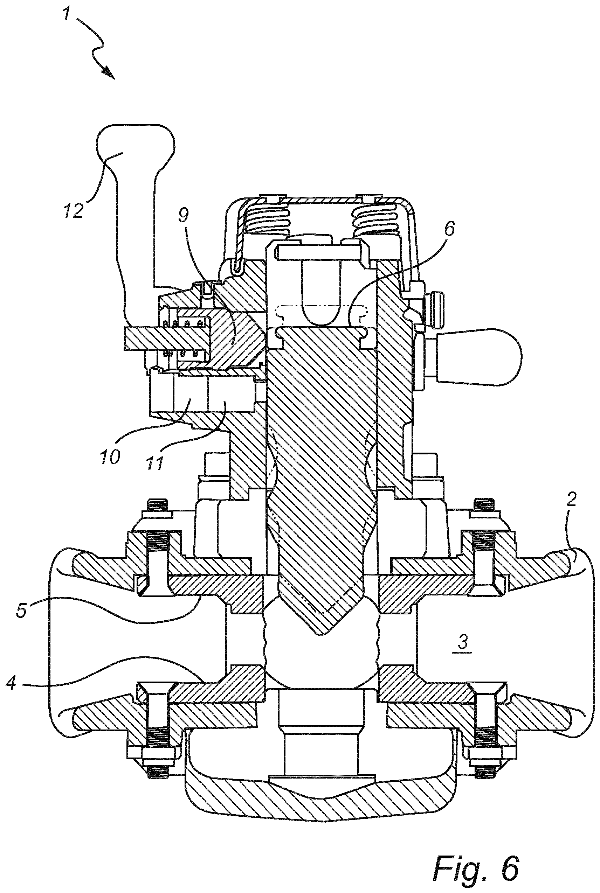

Figures 5 and 6 illustrate the coupling pin 6 in the first position, and Figures 3 and 4 illustrate the coupling pin 6 in the second position. As can be seen in these Figures, the first position is an upper position and the second position is a lower position. Accordingly, the first position will henceforth be referred to as the upper position and the second position will be referred to as the lower position. The path along which the coupling pin 6 moves between the upper and lower positions is straight.

In the upper position (see Figures 5 and 6), the coupling pin 6 is positioned such that a bottom portion of the coupling pin 6 protrudes into the compartment 3 from above. The bottom portion does not extend all the way down to the support member 4. So there is some free, vertical space between support member 4 and the coupling pin 6 when the latter is in the upper position. As will be further explained below, the eye 100 may then move into and out of the towing position by pushing the coupling pin 6 upwards.

In the lower position (see Figures 3 and 4), the coupling pin 6 extends through the entire compartment 3 as well as the through hole of the support member 4. The support member 4 is thus arranged so as to receive the coupling pin 6 when the coupling pin 6 is in the lower position.

The illustrated trailer coupling 1 comprises a mechanism capable of locking the coupling pin 6 in the lower position. The locking mechanism comprises the arm 7 and a locking member 8. The locking member 8 is in this case a pin. The locking member 8 is movable along a path which is straight and horizontal. It follows that in the illustrated example the locking member 8 and the coupling pin 6 are movable along paths that are perpendicular to each other. Figure 4 shows the locking member 8 at one of the two end positions of the path, and Figure 6 shows the locking member 8 at the other end position. When positioned as in Figure 4, the arm 7 and the locking member 8 help to prevent the coupling pin 6 from moving upward, whereby the coupling pin 6 is locked in the lower position. When positioned as in Figure 6, the locking member 8 does not prevent the coupling pin 6 from moving. A lock sensor 10 is configured to detect whether the locking member 9 is positioned at any of the two end positions and, thereby, whether or not the coupling pin 6 is locked in the lower position. The lock sensor 10 is in this case a contactless sensor, such as an optical sensor, an inductive sensor, a magnetic sensor or a Hall effect sensor. Also, the lock sensor 10 is in this case arranged close to the locking member 9. Arranging the lock sensor 10 close to the locking member 9 helps to increase the accuracy with which the lock sensor 10 detects the position of the locking member 9.

The trailer coupling 1 further comprises a mechanism capable of locking the coupling pin 6 in the upper position, which mechanism comprises the arm 7. In the illustrated example, the arm 7 thus helps to lock the coupling pin 6 in the lower position as well as the upper position. It should be noted that, when the coupling pin 6 is locked in the upper position, the coupling pin 6 can still move slightly in an unlocking direction, i.e. upward in the illustrated example. Such a movement releases the coupling pin 6 which, as a result, automatically falls down. The coupling pin 6 may for example be spring biased towards the lower position. The dotted contour in Figure 6 illustrates schematically an example position of the coupling pin 6 after having been pushed upward in order to be unlocked.

The trailer coupling 1 comprises a magnitude sensor 11. In the illustrated example, the magnitude sensor 11 is arranged close to where the top of the coupling pin 6 is located when the coupling pin 6 is in the upper position. As illustrated in Figures 4 and 6, the magnitude sensor 11 is in this case also arranged close to an opening into the compartment where the coupling pin 6 is located. The magnitude sensor 11 is configured to detect whether or not the amount of wear of the support member 4 exceeds a predetermined threshold. Specifically, the magnitude sensor 11 is in this case configured to provide a measure indicative of the magnitude of the coupling pin's 6 movement when the eye 100 pushes the coupling pin 6 upward in order to enter or leave the towing position. By comparing the detected measure to a reference value, the magnitude sensor 11, or a separate electronic unit connected to the magnitude sensor 11, may determine whether or not the wear of the support member 4 has reached the predetermined threshold.

One preferably defines the predetermined threshold so that, when the threshold is reached, the eye 100 still can release the coupling pin 6 when moving into and out of the towing position. Differently stated, the predetermined threshold is preferably reached before the eye 100 can move into and out of the towing position without releasing the coupling pin 6. In practice, the predetermined threshold is typically defined to have been reached when the support member 4 has been worn down less than 5 mm relative to its unworn state, such as 3 mm or 4 mm. The reference value, with which the detected measure is compared, may for example be the highest position that the top end of the coupling pin 6 reaches when pushed by the eye 100 and the support member 4 is newly replaced. Hence, the reference value may be associated with the support member 4 in an unworn state.

The skilled person realizes that there are a variety of ways in which the magnitude sensor 11 can be configured to provide a measure indicative of the magnitude of the coupling pin's 6 movement. For example, the magnitude sensor 11 may be an optical sensor arranged to be responsive to the movement of reflective strips attached to the coupling pin 6. As another example, if the coupling pin 6 is made of a magnetic material and the lifting sleeve 8 is made of a non-magnetic material, for example a plastic material, one may arrange a Hall effect sensor to be responsive to the movement of a joint between the magnetic and non-magnetic materials. In such case, one would typically use more than one Hall effect sensor and position them in a vertical row.

When the trailer coupling 1 is mounted to a truck, a trailer can be connected to the truck in the following way. First, the truck driver checks that the coupling pin 6 is in the upper position and manoeuvers the truck so that the trailer coupling 1 and the eye 100 are aligned and faces each other. The truck driver then carefully maneuvers the truck in reverse towards the eye 100. Upon entering the compartment 3, the eye 100 strikes the bottom portion of the coupling pin 6 which, thereby, is pushed upwards and released from its locked, upper position. The eye 100 enters the towing position inside the compartment 3, and the released coupling pin 6 automatically drops down, through the eye 100 and the support member 4. The coupling pin 6 is automatically locked in the lower position by the arm 7 and the locking member 9. The eye 100 is now secured to the trailer coupling 1, and the trailer is ready to be towed. Using a handle 12, the truck driver can unlock the coupling pin 6 and raise the coupling pin 6 from the lower position to the upper position. The eye 100 can then be pulled out of the trailer coupling 1. The eye 100 will push the coupling pin 6 upwards when moving out of the trailer coupling 1, something which causes the coupling pin 6 to automatically fall down (but not through the eye 100 which is no longer in the towing position).

During towing, the eye 100 causes wear on the support member 4 by mechanically abrading the top surface of the support member 4. As the support member 4 becomes more worn, there is more vertical free space between the top surface of the support member 4 and the bottom end of the coupling pin 6 in the upper position. Consequently, with time, the coupling pin 6 is pushed a smaller and smaller distance upwards by the eye 100, when the latter enters or leaves the towing position. Eventually the amount of wear of the support member 4 reaches the predetermined threshold. The magnitude sensor 11 detects that the predetermined threshold has been reached and alerts the truck driver that the support member 4 needs to be replaced. Alternatively, some other unit connected to the magnitude sensor 11 alerts the driver. The truck driver may for example be alerted through the generation of an auditory signal and/or a visual signal.

The person skilled in the art realizes that the present invention is not limited to the preferred embodiment described above. For example, the illustrated magnitude sensor 11 and the lock sensor 10 are separate units, but in a different example the two sensors 10, 11 may be formed by the same sensor. Further, other configurations of the magnitude sensor 11 and the lock sensor 10 are possible. One or both of them may for example be contact sensors instead of contactless sensors as in the examples given above. The magnitude sensor 11 may be configured to measure an angle of an arm mechanically connected to the coupling pin 6 so as to pivot when the coupling pin 6 moves up and down. Still further, the trailer coupling 1 may be equipped with a mechanism for facilitating the lifting of the coupling pin 6 from the lower position to the upper position, such as a pneumatic mechanism.

Such and other obvious modifications must be considered to be within the scope of the present invention, as it is defined by the appended claims. It should be noted that the above-described embodiment illustrates rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other members or steps than those listed in the claim. The word "a" or "an" preceding a member does not exclude the presence of a plurality of such members.

## Claims

1. A trailer coupling (1) for connecting a trailer to a towing vehicle on which the trailer coupling (1) is mounted, the trailer coupling (1) being adapted to receive a connection portion (100) of a drawbar (101) mounted to the trailer to be towed, the trailer coupling (1) comprising:
a guiding funnel (2) for guiding the connection portion (100) into a towing position, the guiding funnel (2) comprising a seat (2c);
a wearable support member (4) removably arranged inside the seat (2c) so as to abut against the connection portion (100) when the connection portion (100) is received by the trailer coupling (1) and positioned in the towing position, the support member (4) abutting from below and reducing contact wear between the guiding funnel (2) and the connection portion (100); and
a movable coupling member (6) having a first position, in which the coupling member (6) allows for the connection portion (100) to be moved into and out of the towing position, and a second position, in which the coupling member (6) secures the connection portion (100) when the connection portion (100) is in the towing position, the first position being such that the connection portion (100), when entering and leaving the towing position, pushes the coupling member (6) to perform a movement;
the trailer coupling further comprising a magnitude sensor (11) configured to provide a measure indicative of a magnitude of said movement, **characterized in that** the magnitude sensor (11) thereby being capable of detecting that an amount of wear of the support member (4) exceeds a predetermined threshold, the amount of wear being caused by friction against the connection portion (100) when the connection portion (100) is in the towing position.

2. The trailer coupling (1) according to claim 1, wherein said movement is an upward movement.

3. The trailer coupling (1) according to claim 1 or 2, wherein said measure is one of a distance, a position and an angle.

4. The trailer coupling (1) according to any of the preceding claims, wherein the magnitude sensor (11) is configured to provide said measure by a contactless measurement technique.

5. The trailer coupling (1) according to any of the preceding claims, wherein the magnitude sensor (11) is one of an optical sensor, an inductive sensor, a magnetic sensor and a Hall effect sensor.

6. The trailer coupling (1) according to any of the preceding claims, wherein the coupling member (6) is arranged to be locked in the first position and to be unlocked by said movement.

7. The trailer coupling (1) according to claim 6, wherein the predetermined threshold is set such that the connection portion (100) is unable to enter and leave the towing position without pushing the coupling member (6) to unlock when the amount of wear of the support member (4) is less than or equal to the predetermined threshold.

8. The trailer coupling (1) according to any of the preceding claims, further comprising
a locking member (8) arranged to lock the coupling member (6) in the second position and
a lock sensor (10) configured to detect a position of the locking member (8).

9. The trailer coupling (1) according to claim 8, wherein the lock sensor (10) is integrated with the magnitude sensor (11).

10. The trailer coupling (1) according to any of the preceding claims, wherein the trailer coupling (1) is adapted to receive a connection portion (100) in the form of an eye, and wherein coupling member (6) is arranged to secure the connection portion (100) in the towing position by extending therethrough.

## Patentansprüche

1. Anhängerkupplung (1) zum Verbinden eines Anhängers mit einem Zugfahrzeug, an dem die Anhängerkupplung (1) montiert ist, wobei die Anhängerkupplung (1) so angepasst ist, dass sie einen Verbindungsabschnitt (100) einer Zugstange (101) aufnimmt, die an dem Anhänger, der gezogen werden soll, montiert ist, die Anhängerkupplung (1) umfassend:
einen Führungstrichter (2) zum Führen des Verbindungsabschnitts (100) in eine Zugposition, wobei der Führungstrichter (2) einen Sitz (2c) umfasst;
ein Verschleißträgerelement (4), das entfernbar innerhalb des Sitzes (2c) angeordnet ist, um an dem Verbindungsabschnitt (100) anzuliegen, wenn der Verbindungsabschnitt (100) von der Anhängerkupplung (1) aufgenommen und in der Zugposition positioniert wird, wobei das Trägerelement (4) von unten anliegt und den Kontaktverschleiß zwischen dem Führungstrichter (2) und dem Verbindungsabschnitt (100) verringert; und
ein bewegliches Kupplungselement (6), das eine erste Position aufweist, in der das Kupplungselement (6) ein Ein- und Ausfahren des Verbindungsabschnitts (100) in die Zugposition ermöglicht, und eine zweite Position, in der das Kupplungselement (6) den Verbindungsabschnitt (100) in der Zugposition sichert, wenn der Verbindungsabschnitt (100) in der Zugposition ist, wobei die erste Position derart ist, dass der Verbindungsabschnitt (100) beim Ein- und Ausfahren der Zugposition das Kupplungselement (6) drückt, um eine Bewegung auszuführen;
die Anhängerkupplung ferner einen Größensensor (11) umfasst, der konfiguriert ist, um ein Maß bereitzustellen, das eine Größe der Bewegung anzeigt, **dadurch gekennzeichnet, dass**
der Größensensor (11) dadurch erkennen kann, dass ein Verschleiß des Trägerelements (4) einen vorbestimmten Schwellenwert überschreitet, wobei der Verschleiß durch Reibung gegen den Verbindungsabschnitt (100), wenn der Verbindungsabschnitt (100) sich in der Zugposition befindet, verursacht wird.

2. Anhängerkupplung (1) nach Anspruch 1, wobei die Bewegung eine Aufwärtsbewegung ist.

3. Anhängerkupplung (1) nach Anspruch 1 oder 2, wobei das Maß eine Entfernung, eine Position und ein Winkel ist.

4. Anhängerkupplung (1) nach einem der vorhergehenden Ansprüche, wobei der Größensensor (11) konfiguriert ist, um das Maß durch eine kontaktlose Messtechnik bereitzustellen.

5. Anhängerkupplung (1) nach einem der vorhergehenden Ansprüche, wobei der Größensensor (11) ein optischer Sensor, ein induktiver Sensor, ein magnetischer Sensor oder ein Hall-Effekt-Sensor ist.

6. Anhängerkupplung (1) nach einem der vorhergehenden Ansprüche, wobei das Kupplungselement (6) so angeordnet ist, dass es in der ersten Position verriegelt und durch die Bewegung entriegelt wird.

7. Anhängerkupplung (1) nach Anspruch 6, wobei der vorbestimmte Schwellenwert so eingestellt ist, dass der Verbindungsabschnitt (100) nicht in die Zugposition Ein- oder Ausfahren kann, ohne das Kupplungselement (6) zum Entriegeln zu drücken, wenn der Verschleiß des Trägerelements (4) kleiner oder gleich dem vorbestimmten Schwellenwert ist.

8. Anhängerkupplung (1) nach einem der vorhergehenden Ansprüche, ferner umfassend
ein Verriegelungselement (8), das angeordnet ist, um das Kupplungselement (6) in der zweiten Position zu verriegeln und
einen Verriegelungssensor (10), der konfiguriert ist, um eine Position des Verriegelungselements (8) zu erkennen.

9. Anhängerkupplung (1) nach Anspruch 8, wobei der Verriegelungssensor (10) mit den Größensensor (11) integriert ist.

10. Anhängerkupplung (1) nach einem der vorhergehenden Ansprüche, wobei die Anhängerkupplung (1) dazu angepasst ist, einen Verbindungsabschnitt (100) in der Form einer Öse aufzunehmen, und wobei das Kupplungselement (6) angepasst ist, um den Verbindungsabschnitt (100) in der Zugposition zu sichern, indem es sich durch diesen erstreckt.

## Revendications

1. Dispositif d'attelage (1) pour relier une remorque à un véhicule de remorquage sur lequel le dispositif d'attelage (1) est monté, le dispositif d'attelage (1) étant adapté pour recevoir une partie de connexion (100) d'une barre d'attelage (101) montée sur la remorque à remorquer, le dispositif d'attelage (1) comprenant :
une trémie de guidage (2) pour guider la partie de connexion (100) dans une position de remorquage, la trémie de guidage (2) comprenant un siège (2c) ;
un élément de support remplaçable (4) agencé de manière amovible à l'intérieur du siège (2c) de façon à être adjacent à la partie de connexion (100) lorsque la partie de connexion (100) est reçue par le dispositif d'attelage (1) et positionnée dans la position d'attelage, l'élément de support (4) étant adjacent par le dessous et réduisant l'usure de contact entre la trémie de guidage (2) et la partie de connexion (100) ; et
un élément de couplage mobile (6) ayant une première position dans laquelle l'élément de couplage (6) permet à la partie de connexion (100) d'être déplacée dans et hors de la position de remorquage, et une seconde position dans laquelle l'élément de couplage (6) fixe la partie de connexion (100) lorsque la partie de connexion (100) est dans la position de remorquage, la première position étant telle que la partie de connexion (100), en entrant et en sortant de la position de remorquage, pousse l'élément de couplage (6) à effectuer un mouvement,
le dispositif d'attelage comprenant en outre un capteur de grandeur (11) configuré pour fournir une mesure indiquant une grandeur dudit mouvement, **caractérisé en ce que**
le capteur de grandeur (11) est ainsi en mesure de détecter qu'une quantité d'usure de l'élément de support (4) dépasse un seuil prédéterminé, la quantité d'usure étant provoquée par frottement contre la partie de connexion (100) lorsque la partie de connexion (100) est dans la position de remorquage.

2. Dispositif d'attelage (1) selon la revendication 1, dans lequel ledit mouvement est un mouvement ascendant.

3. Dispositif d'attelage (1) selon la revendication 1 ou 2, dans lequel ladite mesure est l'une d'une distance, d'une position et d'un angle.

4. Dispositif d'attelage (1) selon l'une quelconque des revendications précédentes, dans lequel le capteur de grandeur (11) est configuré pour fournir ladite mesure par une technique de mesure sans contact.

5. Dispositif d'attelage (1) selon l'une quelconque des revendications précédentes, dans lequel le capteur de grandeur (11) est l'un d'un capteur optique, d'un capteur inductif, d'un capteur magnétique et d'un capteur à effet Hall.

6. Dispositif d'attelage (1) selon l'une quelconque des revendications précédentes, dans lequel l'élément de couplage (6) est agencé pour être verrouillé dans la première position et pour être déverrouillé par ledit mouvement.

7. Dispositif d'attelage (1) selon la revendication 6, dans lequel le seuil prédéterminé est réglé de telle façon que la partie de connexion (100) est incapable d'entrer et de sortir de la position de remorquage sans pousser l'élément de couplage (6) à déverrouiller lorsque la quantité d'usure de l'élément de support (4) est inférieure ou égale au seuil prédéterminé.

8. Dispositif d'attelage (1) selon l'une quelconque des revendications précédentes, comprenant en outre
un élément de verrouillage (8) agencé pour verrouiller l'élément de couplage (6) dans la seconde position et
un capteur de verrouillage (10) configuré pour détecter une position de l'élément de verrouillage (8).

9. Dispositif d'attelage (1) selon la revendication 8, dans lequel le capteur de verrouillage (10) fait partie intégrante du capteur de grandeur (11).

10. Dispositif d'attelage (1) selon l'une quelconque des revendications précédentes, dans lequel le dispositif d'attelage (1) est adapté pour recevoir une partie de connexion (100) ayant la forme d'un œillet, et dans lequel l'élément de couplage (6) est agencé pour fixer la partie de connexion (100) dans la position de remorquage en s'étendant au travers.
